# EUROPÄISCHE PATENTANMELDUNG

(11) **EP 1 452 412 A1**
(43) Veröffentlichungstag der Anmeldung: **01.09.2004**
(21) Anmeldenummer: 04001636.2
(22) Anmeldetag: 27.01.2004
(51) Int. Cl.: B60S 1/32

(54) **Wischvorrichtung**

(30) Priorität: 28.02.2003 DE 10308786
(71) Anmelder: ROBERT BOSCH GMBH, 70442 Stuttgart (DE)
(72) Erfinder: Weiler, Michael, 363-9 Chungchongbuk-Do (KR); Zimmer, Joachim, 77880 Sasbach (DE)

(57) **Zusammenfassung**

Die Erfindung geht aus von einer Wischvorrichtung, insbesondere für ein Kraftfahrzeug, die einen Wischarm (10a - 101) mit zumindest einem federelastischen Teilbereich umfasst, der eine Wischstange (12a - 121) und ein insbesondere mit der Wischstange (12a - 121) gelenkfrei verbundenes Befestigungsteil (14a - 141) aufweist.

Es wird vorgeschlagen, dass der Wischarm (10a - 101) im Hinblick auf einen Wischkreis wenigstens in einem radial äußeren Bereich gegenüber zumindest einem radial inneren Bereich versteift ausgeführt ist.

## Beschreibung

### Stand der Technik

Die Erfindung geht aus von einer Wischvorrichtung nach dem Oberbegriff des Anspruchs 1.

Aus der DE 31 42 716 C2 ist eine gattungsbildende Wischvorrichtung bekannt. Die Wischvorrichtung umfasst einen Wischarm mit einer aus einem federelastischen Kunststoff gefertigten Wischstange, die an einem Ende gelenkfrei mit einem Befestigungsteil verbunden und an deren freien Ende ein Wischblatt befestigbar ist. Die Wischstange weist über ihre Länge ein konstantes Profil auf.

### Vorteile der Erfindung

Die Erfindung geht aus von einer Wischvorrichtung, insbesondere für ein Kraftfahrzeug, die einen Wischarm mit zumindest einem federelastischen Teilbereich umfasst, der eine Wischstange und ein insbesondere mit der Wischstange gelenkfrei verbundenes Befestigungsteil aufweist.

Unter gelenkfrei verbunden soll in diesem Zusammenhang verstanden werden, dass die Wischstange und das Befestigungsteil ohne eine materiell ausgeführte Schwenkachse verbunden sind, um die die Wischstange und das Befestigungsteil relativ zueinander schwenkbar wären. Bauteile, die infolge einer Materialverformung, insbesondere infolge einer elastischen Verformung, eine Relativbewegung zwischen der Wischstange bzw. Teilbereichen der Wischstange und dem Befestigungsteil ermöglichen, sollen in diesem Zusammenhang nicht als Gelenk angesehen werden und sollen insbesondere vom Schutzbereich mit umfasst sein, wie beispielsweise Filmscharniere, federelastische Teilstücke, federelastische Wischstangen usw. Die Wischstange und das Befestigungsteil können dabei einteilig oder mehrteilig ausgeführt sein.

Es wird vorgeschlagen, dass der Wischarm im Hinblick auf einen Wischkreis wenigstens in einem radial äußeren Bereich gegenüber zumindest einem radial inneren Bereich versteift ausgeführt ist. Es kann bei einer flachen Bauweise ein vorteilhafter Hubausgleich sichergestellt und ungewünschte Verformungen und dadurch bedingte Schwingungen, Windlasten und Kräfte, wie insbesondere in Umkehrlagen, können zumindest reduziert werden. Eigenfrequenzen können verlagert und Resonanzen während des Betriebs können sicher vermieden werden.

Der radial äußere Bereich wird in der Regel aufgrund einer Hebelwirkung weniger verformt als der radial innere Bereich, trägt dadurch weniger zu einer Vorspannkraft bzw. Auflagekraft bei und kann damit ohne große Spannungsverluste versteift werden. Es kann ein definierter, kurzer Hauptbiegebereich, beispielsweise zwischen 5 cm und 20 cm, und damit ein vorteilhaft ähnliches Verhalten wie bei einem Wischarm mit einem Gelenk erreicht werden, wobei der Hauptbiegebereich ebenfalls von einem Profilelement versteift sein kann, das einstückig angeformt oder auch von einem zusätzlichen Bauteil gebildet sein kann.

Die Wischstange weist im Betrieb vorteilhaft eine große Vorspannung auf, wodurch einfach eine geringe Abhängigkeit einer aus der Vorspannung resultierenden Auflagekraft von einer Hubbewegung eines Wischblatts bzw. einer Schwenkbewegung der Wischstange erzielt werden kann. Wird die Länge des Hauptbiegebereichs bei gleicher Vorspannung im Betrieb reduziert, steigt die Belastung im Hauptbiegebereich an, was bei der Festlegung der Länge des Hauptbiegebereichs zu berücksichtigen ist. Die Länge des Hauptbiegebereichs sollte daher zwar möglichst klein ausgeführt werden, plastische Verformungen im Hauptbiegebereich während des Betriebs sollten jedoch zumindest weitgehend vermieden werden, um eine lange Lebensdauer zu erreichen.

Weist die Wischvorrichtung ein Profilelement mit einem von einem ebenen Profil abweichenden Profil auf, beispielsweise mit einem U-Profil, L-Profil, T-Profil, V-Profil, C-Profil, gewellten Profil, einem Profil mit Einbuchtungen usw., kann die Versteifung besonders einfach und kostengünstig erreicht werden.

Das Profilelement kann dabei zumindest teilweise einstückig mit der Wischstange ausgebildet sein, wodurch zusätzliche Bauteile, Montageaufwand, Bauraum und Kosten eingespart werden können.

Ist dagegen das Profilelement von einem zumindest zu einem Wischstangenbauteil der Wischstange getrennten Bauteil gebildet, können das Profilelement und das Wischstangenbauteil getrennt voneinander auf ihre Funktion ausgelegt werden. Das Profilelemerit kann insbesondere aus einem im Vergleich zum Wischstangenbauteil besonders kostengünstigen Material gebildet werden.

Ferner wird vorgeschlagen, dass das Wischstangenbauteil der Wischstange wenigstens teilweise in einem Aufnahmebereich des Profilelements angeordnet ist. Es kann eine einfache Montage erzielt, mittels dem Profilelement können Kanten des Wischstangenbauteils vorteilhaft abgedeckt und es kann insbesondere mittels dem Profilelement zumindest eine Art Fußgängeraufprallschutz erzielt werden.

Ist das Profilelement über wenigstens eine Rastverbindung befestigt, kann die Montage weiter vereinfacht, eine besonders prozesssichere Verbindung erzielt und insbesondere kann eine werkzeuglose Montage und Demontage erreicht werden. Ferner können Rastelemente der Rastverbindung einfach einstückig angeformt und zusätzliche Bauteile und Kosten eingespart werden. Neben einer Rastverbindung sind jedoch auch sämtliche andere, dem Fachmann als sinnvoll erscheinende kraftschlüssige, formschlüssige und/oder stoffschlüssige Verbindungen denkbar, wie beispielsweise Klebeverbindungen, Schweißverbindungen, Schraubverbindungen, Klemmverbindungen durch plastische Verformungen und/oder durch separate Klemmmittel usw.

Ferner kann die Wischvorrichtung als Mehrkomponentenspritzteil ausgebildet sein, bei dem die Wischstange und das Profilelement zumindest teilweise von unterschiedlichen Komponenten gebildet sind. Eine zusätzliche Montage der Bauteile kann entfallen, und dennoch können die Wischstange und das Profilelement vorteilhaft auf ihre Funktionen ausgelegt werden.

Ist das Profilelement in wenigstens einem Betriebszustand das Wischstangenbauteil zumindest teilweise überlappend ausgeführt, kann ein sich zumindest weitgehend über den gesamten Wischarm erstreckendes Profilelement und damit verbunden eine vorteilhaft in Längserstreckung weitgehend gleichmäßige Gestaltung erreicht werden.

In einer weiteren Ausgestaltung der Erfindung wird vorgeschlagen, dass das Profilelement in Längsrichtung eine sich verändernde Querschnittsform aufweist, wodurch in Längsrichtung insbesondere ein vorteilhafter Verlauf der Biegesteifigkeit erzielt werden kann. Es können biegesteife und biegeweiche Bereiche erreicht und zu Schwingungen neigende Teilbereiche können gezielt beeinflusst werden. Das Profilelement kann dabei von einem zu einem Wischarm getrennten Bauteil gebildet oder kann mit dem Wischarm zumindest teilweise einstückig ausgeführt sein. Zusätzlich oder alternativ zu unterschiedlichen Querschnittsformen in Längsrichtung kann das Profilelement in Längsrichtung aus unterschiedlichen Materialen hergestellt sein. Anstatt einer sich verändernder Querschnittsform könnte das Profilelement jedoch auch mit einer gleichbleibenden Querschnittsform bzw. mit einem gleichbleibenden Profil ausgeführt sein, wodurch das Profilelement einfach inklusive Vorbiegen gerollt werden könnte.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Wischvorrichtung mit einem Wischarm in einer Seitenansicht,
- Fig. 2: einen Schnitt entlang der Linie II-II in Fig. 1,
- Fig. 3: einen Schnitt entlang der Linie III-III in Fig. 1,
- Fig. 4: einen Schnitt entlang der Linie IV-IV in Fig. 1,
- Fig. 5: einen Schnitt entlang der Linie V-V in Fig. 1,
- Fig. 6 - 10: Schnittdarstellungen durch zu Fig. 1 alternativen Wischvorrichtungen,
- Fig. 11: eine alternative Wischvorrichtung mit einem getrennt von einem Wischstangenbauteil ausgeführten Profilelement in einer Seitenansicht,
- Fig. 12: die Wischvorrichtung aus Fig. 11 schräg von unten,
- Fig. 13: einen vergrößerten Ausschnitt XIII aus Fig. 12,
- Fig. 14: einen Schnitt entlang der Linie XIV-XIV in Fig. 13,
- Fig. 15: einen Schnitt entlang der Linie XV-XV in Fig. 13,
- Fig. 16 - 19: Schnittdarstellungen durch zu Fig. 11 alternativen Wischvorrichtungen,
- Fig. 20: eine alternative Wischvorrichtung zu Fig. 11 mit einer Biegebereichsüberdeckung im unbelasteten Zustand schräg von unten und
- Fig. 21: die Wischvorrichtung aus Fig. 20 schräg von oben im belasteten Zustand.

### Beschreibung der Ausführungsbeispiele

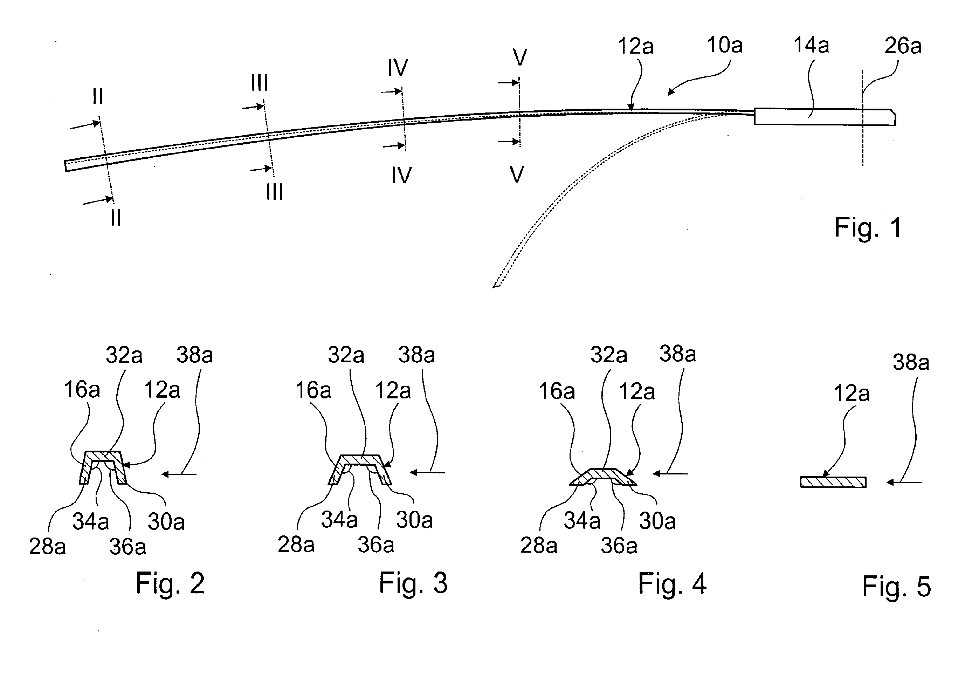

Fig. 1 zeigt eine erfindungsgemäße Wischvorrichtung für ein Kraftfahrzeug mit einem Wischarm 10a. Der Wischarm 10a umfasst eine von einem Stanz-Biegeteil gebildete Wischstange 12a aus Federstahl und ein mit der Wischstange 12a gelenkfrei verbundenes Befestigungsteil 14a aus einem im Wesentlichen biegesteifen Stahl. Anstatt aus Federstahl könnte die Wischstange auch aus anderen, dem Fachmann als sinnvoll erscheinenden Materialien gebildet sein, wie beispielsweise aus einem glasfaserverstärkten Kunststoff usw. Die Wischstange 12a ist mittels eines so genannten Umlappens des Befestigungsteils 14a über eine Klemmverbindung im Befestigungsteil 14a befestigt. An einem dem Befestigungsteil 14a abgewandten Ende der Wischstange 12a ist im Betrieb ein nicht näher dargestelltes bügelloses Wischblatt mit einem bogenförmigen Wischleistenträger befestigt.

Erfindungsgemäß ist der Wischarm 10a im Hinblick auf einen Wischkreis, der sich um eine Lagerachse 26a des Befestigungsteils 14a erstreckt, in einem radial äußeren Bereich gegenüber einem radial inneren Bereich versteift ausgeführt, bzw. nimmt die Biegesteifigkeit der Wischstange 12a von dem dem Befestigungsteil 14a abgewandten Ende in Längsrichtung bis kurz vor das Befestigungsteil 14a kontinuierlich ab.

Die Wischstange 12a ist als Profilelement 16a ausgebildet bzw. die Wischstange 12a ist mit einem Profilelement 16a einstückig ausgeführt, das ein von einem ebenen Profil abweichendes Profil, und zwar ein zu einer zu wischenden Fläche hin offenes U-Profil aufweist. Das Profilelement 16a weist in Längsrichtung eine sich verändernde Querschnittsform auf, und zwar weisen Schenkel 28a, 30a des U-Profils ausgehend von dem dem Befestigungsteil 14a abgewandten Ende in Längsrichtung zum Befestigungsteil 14a eine abnehmende Länge auf und schließen jeweils einen von ca. 95° bis auf 180° ansteigenden Winkel 34a, 36a mit einem Bodenteil 32a des U-Profils ein (Fig. 2 bis 5). Die Schenkel 28a, 30a dienen durch ihre Schrägstellung zu einer im Betrieb auftretenden Strömungsrichtung 38a zudem jeweils als Spoilerelement, durch die im Betrieb eine zusätzliche, strömungsbedingte Auflagekraft des Wischblatts auf die zu wischende Fläche erzielt wird.

In einem Hauptbiegebereich der Wischstange 12a vor dem Befestigungsteil 14a von ca. 10 cm weist die Wischstange 12a ein im Wesentlichen parallel zur Strömungsrichtung 38a verlaufendes, ebenes Profil auf (Fig. 1 und 5). In Fig. 1 ist der Wischarm 10a in einem belasteten Betriebszustand und gestrichelt in einem unbelasteten Betriebszustand dargestellt. Im Betrieb ist die Wischstange 12a im Wesentlichen gerade ausgerichtet bzw. gerade gebogen und bewirkt dadurch eine Auflagekraft des Wischblatts auf die zu wischende Fläche.

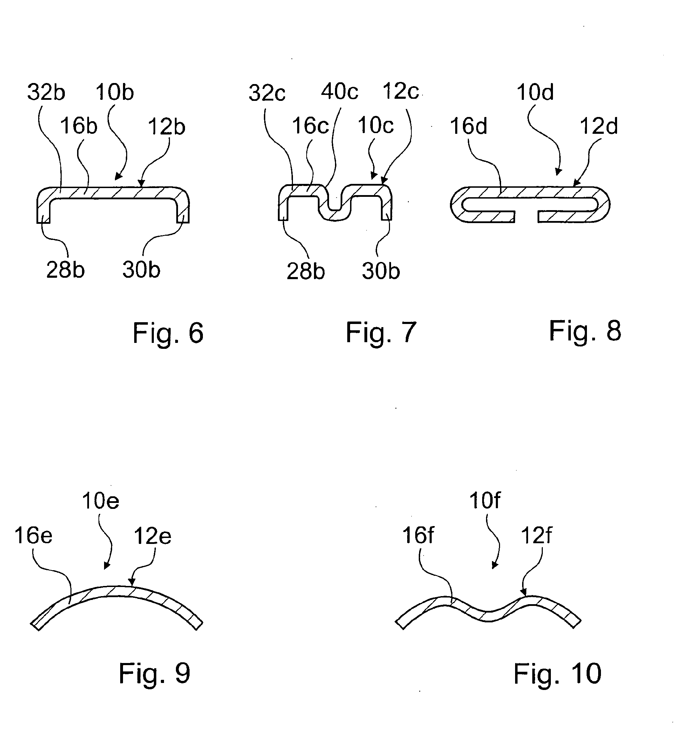

In den Fig. 6 bis 10 sind Querschnitte durch alternative Wischvorrichtungen mit jeweils einem Wischarm 10b, 10c, 10d dargestellt. Bei den Ausführungsbeispielen sind in der Beschreibung im Wesentlichen gleiche Bauteile und gleiche Merkmale grundsätzlich mit den gleichen Bezugszeichen beziffert, wobei zur Unterscheidung der Ausführungsbeispiele Buchstaben hinzugefügt sind. Ferner kann bezüglich gleichbleibender Merkmale und Funktionen auf die Beschreibung zum Ausführungsbeispiel in den Fig. 1 bis 5 verwiesen werden. Die nachfolgende Beschreibung beschränkt sich im Wesentlichen auf die Unterschiede zum Ausführungsbeispiel in den Fig. 1 bis 5.

Der Wischarm 10b umfasst eine einstückig mit einem Profilelement 16b ausgeführte Wischstange 12b. Das Profilelement 16b weist ein U-Profil auf, dessen Schenkel 28b, 30b einen 90°-Winkel zu einem Bodenteil 32b des U-Profils einschließen. Die Schenkel 28b, 30b weisen jeweils eine Länge auf, die um ein mehrfaches kleiner ist als eine Breite der Wischstange 12b.

Der Wischarm 10c in Fig. 7 umfasst eine Wischstange 12c, an deren Bodenteil 32c gegenüber dem Bodenteil 32b in Fig. 6 zusätzlich eine nutförmige Vertiefung 40c angeformt ist. Anstatt einer einzelnen nutförmigen Vertiefung 40c sind grundsätzlich auch mehrere nutförmige Vertiefungen denkbar.
Der Wischarm 10d in Fig. 8 umfasst eine Wischstange 12d, die einstückig mit einem Profilelement 16d ausgebildet ist, das an einem einem Befestigungsteil abgewandten Ende ein relativ weit geschlossenes C-Profil aufweist, wobei das C-Profil zu einer zu wischenden Fläche hin offen ausgeführt ist. Ausgehend von dem dem Befestigungsteil abgewandten Ende in Längsrichtung zum Befestigungsteil des Wischarms 10d weist das C-Profil einen zunehmenden Öffnungsgrad auf.

Der Wischarm 10e in Fig. 9 umfasst eine Wischstange 12e, die einstückig mit einem Profilelement 16e ausgebildet ist, das ein bogenförmiges Profil aufweist, während der Wischarm 10f in Fig. 10 eine Wischstange 12f umfasst, die einstückig mit einem Profilelement 16f ausgebildet ist, das ein gewelltes Profil aufweist. Ausgehend von einem einem Befestigungsteil abgewandten Ende in Längsrichtung zum Befestigungsteil nähern sich die Profile der Profilelemente 16e, 16f einem ebenen Profil an.

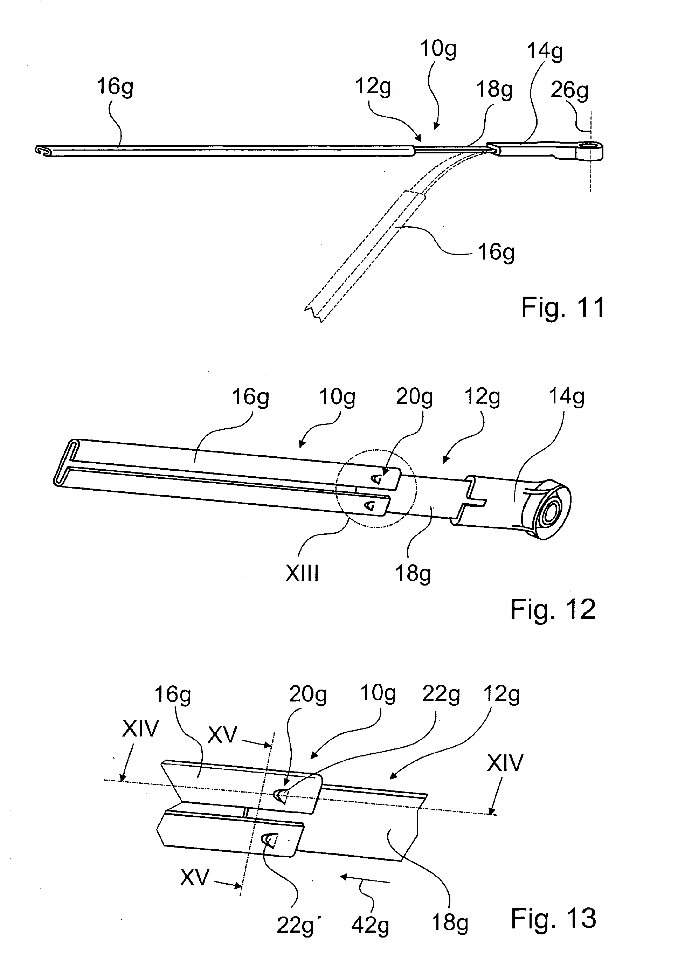

In den Fig. 11 bis 15 ist eine alternative Wischvorrichtung mit einem Wischarm 10g dargestellt. Der Wischarm 10g umfasst ein Befestigungsteil 14g und eine Wischstange 12g, die von einem von einer Blattfeder aus Federstahl gebildeten Wischstangenbauteil 18g und von einem biegesteifen, aus Kunststoff extrudierten Profilelement 16g gebildet ist. Anstatt aus Kunststoff könnte das Profilelement 16g auch aus einem Metall hergestellt sein.

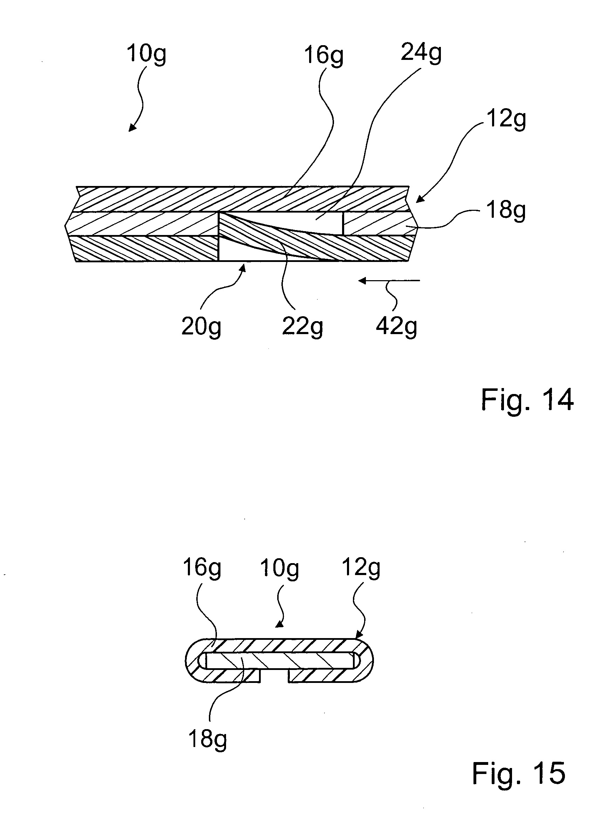

Das Wischstangenbauteil 18g weist ein ebenes Rechteckprofil auf und ist an einem Ende mittels eines so genannten Umlappens des Befestigungsteils 14g über eine Klemmverbindung im Befestigungsteil 14g gehalten. Mit einem zweiten Ende ist das Wischstangenbauteil 18g in einen Aufnahmebereich des Profilelements 16g eingeschoben, das im Wesentlichen ein zu einer Unterseite hin offenes C-Profil aufweist (Fig. 12 und 15).

Das Wischstangenbauteil 18g ist über eine Rastverbindung 20g im Aufnahmebereich des Profilelements 16g fixiert. Am Profilelement 16g sind an einem dem Wischstangenbauteil 18g zugewandten Ende in einer im montierten Zustand zu einer zu wischenden Fläche weisenden unteren Wandung zwei Rastmittel 22g, 22g' angeformt, die jeweils von einem kreisrunden, teilweise freigeschnittenen Abschnitt gebildet sind, der in Einschubrichtung 42g des Wischstangenbauteils 18g eine ansteigende, über eine Innenseite des Aufnahmebereichs hinausragende Schrägfläche bildet (Fig. 12, 13 und 14).

Kommt das Wischstangenbauteil 18g beim Einschieben mit seinem freien Ende in den Bereich der Rastmittel 22g, 22g', werden die Rastmittel 22g, 22g' senkrecht zur Einschubrichtung 42g und senkrecht zur Unterseite des Profilelements 16g ausgelenkt und rasten anschließend bei einer fortgeführten Einschubbewegung in von kreisrunden Durchgangsöffnungen gebildete Rastmittel 24g am Wischstangenbauteil 18g ein (Fig. 14). Anstatt dass die Rastmittel 22g, 22g' ausgelenkt werden, ist denkbar, dass das Wischstangenbauteil 18g beim Rastvorgang ausgelenkt wird. Hierfür könnten möglicherweise Freiräume an einer Deckseite des Profilelements 16g vorgesehen werden, in die das Wischstangenbauteil 18g beim Rastvorgang ausgelenkt werden bzw. ausweichen kann. Gleichzeitig mit dem Einrasten kommt das Wischstangenbauteil 18g mit seiner Stirnseite an einem in den Aufnahmebereich des Profilelements 16g ragenden, angeformten, nicht näher dargestellten Anschlag zur Anlage. Das Wischstangenbauteil 18g ist sicher im Profilelement 16g fixiert.

Das Profilelement 16g bildet im Hinblick auf einen Wischkreis einen radial äußeren, biegesteifen Teil der Wischstange 12g und das Wischstangenbauteil 18g bildet einen radial inneren Hauptbiegebereich der Wischstange 12g, der eine Länge zwischen 5 cm und 20 cm aufweist. In den Fig. 11 und 12 ist der Wischarm 10g in einem belasteten Betriebszustand dargestellt, wobei in Fig. 11 zudem der Wischarm 10g gestrichelt in einem unbelasteten Betriebszustand dargestellt ist. Im Betrieb ist das Wischstangenbauteil 18g im Wesentlichen gerade gebogen und bewirkt dadurch eine Auflagekraft eines Wischblatts auf die zu wischende Fläche.

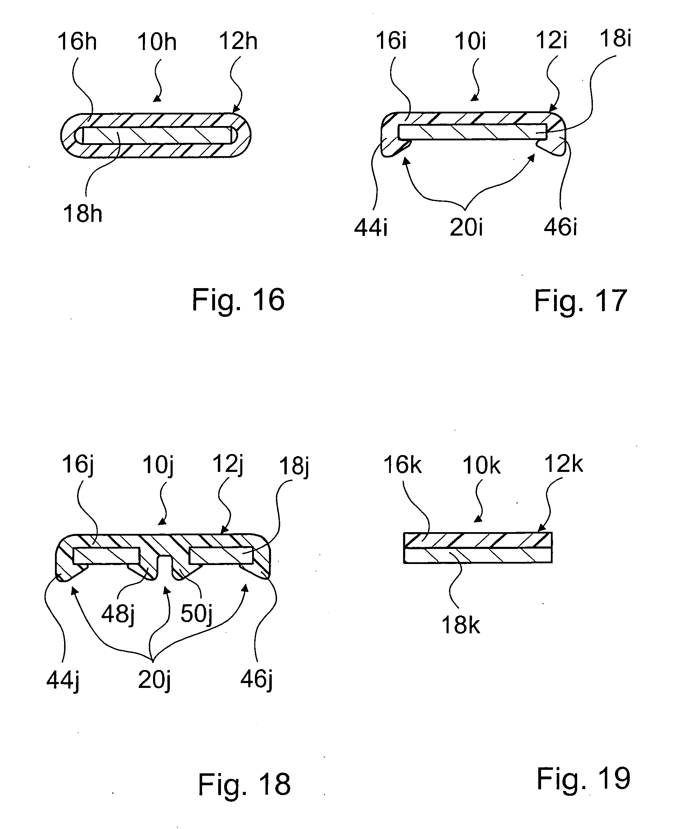

In den Fig. 16 bis 19 sind Schnittdarstellungen durch zu Fig. 11 alternative Wischvorrichtungen dargestellt. Bezüglich gleichbleibender Merkmale und Funktionen kann auf die Beschreibung zum Ausführungsbeispiel in den Fig. 11 bis 15 verwiesen werden. Die nachfolgende Beschreibung beschränkt sich im Wesentlichen auf die Unterschiede zum Ausführungsbeispiel in den Fig. 11 bis 15.

Die Wischvorrichtung in Fig. 16 weist einen Wischarm 10h auf, der ein Befestigungsteil und eine Wischstange 12h umfasst, die von einem biegesteifen Profilelement 16h und einem von einer Blattfeder gebildeten Wischstangenbauteil 18h gebildet ist. Das Profilelement 16h weist ein geschlossenes, hülsenförmiges Profil auf.

Die Wischvorrichtung in Fig. 17 weist einen Wischarm 10i auf, der ein Befestigungsteil und eine Wischstange 12i umfasst, die von einem biegesteifen Profilelement 16i und einem von einer Blattfeder gebildeten Wischstangenbauteil 18i gebildet ist. Das Profilelement 16i weist im Wesentlichen ein zu einer Unterseite offenes C-Profil auf. Bei der Montage wird das Profilelement 16i auf eine Deckseite des Wischstangenbauteils 18i aufgesetzt und anschließend mit einer Druckbewegung senkrecht zur Deckseite des Wischstangenbauteils 18i mit seinen als Rasthaken ausgebildeten Schenkeln 44i, 46i an dem Wischstangenbauteil 18i eingerastet.

Die Wischvorrichtung in Fig. 18 weist einen Wischarm 10j auf, der ein Befestigungsteil und eine Wischstange 12j umfasst, die von einem biegesteifen Profilelement 16j und einem von einer Blattfeder gebildeten Wischstangenbauteil 18j gebildet ist.

Das Profilelement 16j weist im Wesentlichen ein aus zwei C-Profilen zusammengesetztes, zu einer Unterseite offenes Profil auf. Bei der Montage wird das Profilelement 16j auf eine Deckseite des geschlitzten Wischstangenbauteils 18j aufgesetzt und anschließend mit einer Druckbewegung senkrecht zur Deckseite des Wischstangenbauteils 18j mit seinen als Rasthaken ausgebildeten Schenkeln 44j, 46j, 48j, 50j an dem Wischstangenbauteil 18j eingerastet, wobei die Schenkel 48j, 50j in einen Schlitz des Wischstangenbauteils 18j eingreifen.

Die Wischvorrichtung in Fig. 19 weist einen Wischarm 10k auf, der ein Befestigungsteil und eine Wischstange 12k umfasst, die von einem biegesteifen Profilelement 16k und einem von einer Blattfeder gebildeten Wischstangenbauteil 18k gebildet ist. Das Profilelement 16k weist ein ebenes Rechteckprofil auf und ist auf eine Deckseite des Wischstangenbauteils 18k aufgeklebt.

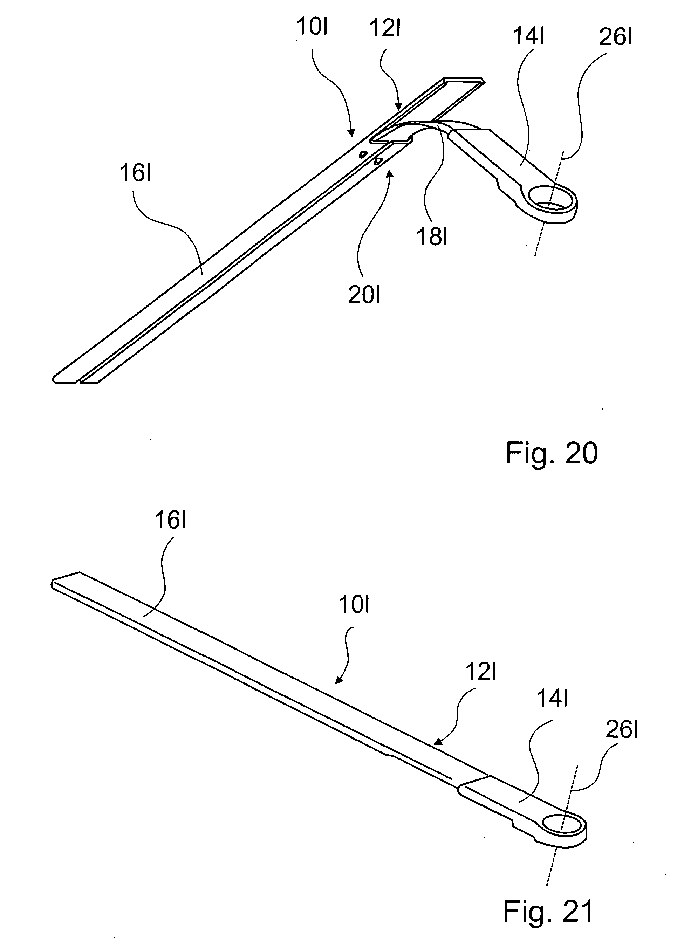

In den Fig. 20 und 21 ist eine im Wesentlichen der Wischvorrichtung aus Fig. 11 bis 14 entsprechende Wischvorrichtung dargestellt. Im Gegensatz zur Wischvorrichtung in den Fig. 11 bis 14 weist die Wischvorrichtung in den Fig. 20 und 21 eine Wischstange 12l mit einem Profilelement 16l auf, das in einer Betriebsstellung ein Wischstangenbauteil 18l überlappend ausgeführt ist. Fig. 20 zeigt die Wischvorrichtung mit ihrem Wischarm 10l im unbelasteten und Fig. 21 im belasteten Zustand. Das Profilelement 16l erstreckt sich im belasteten Zustand über die gesamte Länge der Wischstange 12l.

### Bezugszeichen

- 10: Wischarm
- 12: Wischstange
- 14: Befestigungsteil
- 16: Profilelement
- 18: Wischstangenbauteil
- 20: Rastverbindung
- 22: Rastmittel
- 24: Rastmittel
- 26: Lagerachse
- 28: Schenkel
- 30: Schenkel
- 32: Bodenteil
- 34: Winkel
- 36: Winkel
- 38: Strömungsrichtung
- 40: Vertiefung
- 42: Einschubrichtung
- 44: Schenkel
- 46: Schenkel
- 48: Schenkel
- 50: Schenkel

## Patentansprüche

1. Wischvorrichtung, insbesondere für ein Kraftfahrzeug, die einen Wischarm (10a - 10l) mit zumindest einem federelastischen Teilbereich umfasst, der eine Wischstange (12a - 12l) und ein insbesondere mit der Wischstange (12a - 12l) gelenkfrei verbundenes Befestigungsteil (14a - 14l) aufweist, **dadurch gekennzeichnet, dass** der Wischarm (10a - 10l) im Hinblick auf einen Wischkreis wenigstens in einem radial äußeren Bereich gegenüber zumindest einem radial inneren Bereich versteift ausgeführt ist.

2. Wischvorrichtung'nach Anspruch 1, **gekennzeichnet durch** ein Profilelement (16a - 16j, 16l) mit einem von einem ebenen Profil abweichenden Profil.

3. Wischvorrichtung nach Anspruch 2, **dadurch gekennzeichnet, dass** das Profilelement (16a - 16l) zumindest teilweise einstückig mit der Wischstange (12a - 12l) ausgebildet ist.

4. Wischvorrichtung nach einem der vorhergehenden Ansprüche, **gekennzeichnet durch** zumindest ein Profilelement (16g - 16l), das von einem zumindest zu einem Wischstangenbauteil (18g - 18l) der Wischstange (12g - 12l) getrennten Bauteil gebildet ist.

5. Wischvorrichtung nach Anspruch 4, **dadurch gekennzeichnet, dass** das Wischstangenbauteil (18g - 18j, 18l) der Wischstange (12g - 12j, 12l) wenigstens teilweise in einem Aufnahmebereich des Profilelements (16g - 16j, 16l) angeordnet ist.

6. Wischvorrichtung nach Anspruch 4 oder 5, **dadurch gekennzeichnet, dass** das Profilelement (16g - 16j, 16l) über wenigstens eine Rastverbindung (20g - 20j, 20l) befestigt ist.

7. Wischvorrichtung nach einem der Ansprüche 4 bis 6, **dadurch gekennzeichnet, dass** das Profilelement (16l) in wenigstens einem Betriebszustand das Wischstangenbauteil (18l) zumindest teilweise überlappend ausgeführt ist.

8. Wischvorrichtung zumindest nach Anspruch 2, **dadurch gekennzeichnet, dass** das Profilelement (16a - 16f) in Längsrichtung eine sich verändernde Querschnittsform aufweist.

9. Profilelement für eine Wischvorrichtung nach einem der vorhergehenden Ansprüche zur Versteifung des Wischarms (10a - 10l) in zumindest einem Bereich.
